# EUROPEAN PATENT APPLICATION

(11) **EP 4 736 649 A1**
(43) Date of publication of application: **06.05.2026**
(21) Application number: 24209741.8
(22) Date of filing: 30.10.2024
(51) Int. Cl.: A01N 65/22, A01P 7/04

(54) **SYNERGISTIC PESTICIDE COMPOSITIONS AND FORMULATIONS FOR CONTROLLING INDOOR AND OUTDOOR PESTS**

(71) Applicant: Ross Lifescience USA Inc., Lorton, VA 22079 (US)
(72) Inventor: KSHIRSAGAR, Rajendra Dattu, 411026 Maharashtra (IN); SRIDHAR, S, 411026 Maharashtra (IN); NAIR, Pavana, 411026 Maharashtra (IN); E, Seetharaman, 411026 Maharashtra (IN); PEDIBHOTLA, Venkat, Lorton, VA 22079 (US)
(74) Representative: Calysta NV

(57) **Abstract**

The present disclosure provides pesticide compositions and formulations for controlling indoor and outdoor pests comprising *Pogostemon cablin,* Citral, Thymol, Camphor, and excipient(s). Also, provided are methods for controlling indoor and outdoor pests. The ingredients of the compositions and formulations of the present disclosure exhibit functional reciprocity therebetween, and aid in effective repelling, killing, preventing, and/or reducing the population of indoor and outdoor pests.

## Description

### FIELD OF THE INVENTION

The present disclosure relates generally to the field of pesticide composition. In particular, the present disclosure provides compositions and formulations for controlling various indoor and outdoor pests. Also provided is a method for controlling indoor and outdoor pests.

### BACKGROUND

The most numerous and successful animals on earth are undoubtedly insects. Despite some helpful species, many insects are a bane to humans. Many months of the year, people venturing outdoors are plagued by biting insects, such as mosquitoes, gnats, noseeums (biting midges), flies, ticks, head lice, fire ants, fleas, and other insects. The bites and stings inflicted by "biting" insects are often itchy, can become infected, and may prove fatal to the subj ects.

Almost everyone has had the unpleasant experience of being bitten by a mosquito. Mosquito bites can cause skin irritation through an allergic reaction to the mosquito's saliva - this is what causes the red bump and itching. They are the vectors responsible for transmitting serious and life-threatening diseases such as malaria, dengue, yellow fever, chikungunya, and lymphatic filariasis.

Numerous devices, agents, compositions, and formulations are already reported in the literature and are commercially available, capable of repelling, killing, or reducing the number of pests such as mosquitoes, houseflies, cockroaches, etc. in a premise. However, these devices, agents/formulations still suffer from certain limitations such as being expensive, ineffective, and exhibiting certain side-effects such as irritation, allergy, uneasiness, reduction in oxygen content, etc.

Therefore, it would be desirable to develop new and improved compositions that repel, kill, prevent, reduce, and control various indoor and outdoor pests, and overcome one or more problems associated with the conventional compositions/formulations thereof. The present disclosure satisfies the existing as well as other needs.

### SUMMARY

The present disclosure addresses these and other unmet deficiencies inherent in the relevant pesticide arts and overcomes them by providing compositions/formulations that exhibit enhanced efficacy and economic significance.

The present disclosure relates to a pesticide composition. Specifically, the present disclosure relates to a pesticide composition for controlling indoor and outdoor pests, said composition includes: *Pogostemon cablin* in an amount ranging from about 0.05% to about 35% by weight of the composition; Citral in an amount ranging from about 0.1% to about 30% by weight of the composition; Thymol in an amount ranging from about 0.1% to about 30.0% by weight of the composition; Camphor in an amount ranging from about 0.1% to about 35% by weight of the composition; and rest is an excipient.

The present disclosure further relates to a solid pesticide formulation for controlling indoor and outdoor pests, said formulation includes: *Pogostemon cablin* in an amount ranging from about 0.05% to about 35% by weight of the formulation; Citral in an amount ranging from about 0.1% to about 30% by weight of the formulation; Thymol in an amount ranging from about 0.1% to about 30.0% by weight of the formulation; Camphor in an amount ranging from about 0.1% to about 35% by weight of the formulation; and rest is an excipient.

The present disclosure still further relates to a liquid or a semisolid pesticide formulation for controlling indoor and outdoor pests, said formulation includes: *Pogostemon cablin* in an amount ranging from about 0.05% to about 35% by weight of the formulation; Citral in an amount ranging from about 0.1% to about 30% by weight of the formulation; Thymol in an amount ranging from about 0.1% to about 30.0% by weight of the formulation; Camphor in an amount ranging from about 0.1% to about 35% by weight of the formulation; and rest is an excipient.

The present disclosure also relates to a method for controlling indoor and outdoor pests. The method for controlling indoor and outdoor pests includes providing a pesticide composition including *Pogostemon cablin* in an amount ranging from about 0.05% to about 35% by weight of the composition; Citral in an amount ranging from about 0.1% to about 30% by weight of the composition; Thymol in an amount ranging from about 0.1% to about 30.0% by weight of the composition; Camphor in an amount ranging from about 0.1% to about 35% by weight of the composition; and rest is an excipient.

### DETAILED DESCRIPTION

The embodiments herein and the various features and advantageous details thereof are explained more comprehensively with reference to the non-limiting embodiments that are detailed in the following description. Descriptions of well-known components and processing techniques are omitted to not unnecessarily obscure the embodiments herein. The examples used herein are intended merely to facilitate an understanding of how the embodiments herein may be practiced and to further enable those of skill in the art to practice the embodiments herein. Accordingly, the examples should not be construed as limiting the scope of the embodiments herein.

Unless otherwise specified, all terms used in disclosing the invention, including technical and scientific terms, have the meaning as commonly understood by one of the ordinary skills in the art to which this invention belongs. Through further guidance, term definitions may be included to better appreciate the teaching of the present invention.

As used in the description herein, the meaning of "a," "an," and "the" includes plural reference unless the context clearly dictates otherwise. Also, as used in the description herein, the meaning of "in" includes "in" and "on" unless the context clearly dictates otherwise.

As used herein, the terms "comprise", "comprises", "comprising", "include", "includes", and "including" are meant to be non-limiting, i.e., other steps and other ingredients that do not affect the end of result can be added. The above terms encompass the terms "consisting of" and "consisting essentially of'.

The terms "weight percent", "percent by weight", "% by weight", and variations thereof, as used herein, refer to the concentration of a substance as the weight of that substance divided by the total weight of the composition and multiplied by 100. It is understood that, as used here, "percent", "%", and the like are intended to be synonymous with "weight percent", etc.

The terms `pest' and 'insect' are used synonymously and interchangeably throughout the specification. The terms `pest' or 'insect' as used herein refers to any insect or small animal that is harmful or damages crops or livestock or otherwise interferes with the wellbeing of human beings such as spreading disease, causes destruction, or is otherwise a nuisance. The term `pest' includes but is not limited to arthropods such as insects, arachnids, centipedes, mosquitoes, houseflies, drain flies, *Vespa* spp. (hornet), cockroaches, ants, bedbugs, spiders, mites, aphids, thrips, whiteflies, loopers, worms, beetles, leafrollers, moths, weevils including larvae and eggs thereof, and reptiles such as lizards.

The term 'mosquito' or 'mosquitoes' as used herein refers to each species of mosquitoes reported in the literature. It includes both male and female mosquitoes. The term further includes them in their different stages of life cycles such as egg, larva, pupa, and adult.

The term 'controlling' as used herein refers to repelling, killing, preventing, and/or reducing the population of various indoor and outdoor pest(s) and/or insect(s).

In some embodiments, the numbers expressing quantities of ingredients, properties such as concentration, reaction conditions, and so forth, used to describe and claim certain embodiments of the invention are to be understood as being modified in some instances by the term "about". Accordingly, in some embodiments, the numerical parameters outlined in the written description are approximations that can vary depending on the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values outlined in the specific examples are reported as precisely as practicable.

The recitation of ranges of values herein is merely intended to serve as a shorthand method of referring individually to each separate value falling within the range. Unless otherwise indicated herein, each value is incorporated into the specification as if it were individually recited herein.

The headings and abstract of the invention provided herein are for convenience only and do not interpret the scope or meaning of the embodiments.

The following discussion provides many example embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

The present disclosure relates generally to the field of pesticide composition. In particular, the present disclosure provides compositions and formulations for controlling various indoor and outdoor pests. Also provided is a method for controlling indoor and outdoor pests.

The present disclosure is on the premise of a surprising discovery that when *Pogostemon cablin,* Citral, Thymol, and Camphor are included as part of a pesticide composition in the weight percentages as defined herein, they exhibit exceptional functional reciprocity and synergistic activity, and afford dramatic improvement in controlling the population of various indoor as well as outdoor pests as compared to the individual ingredients and that too at a very low concentration. The observed synergistic effect is unexpected and surprising.

The present disclosure relates to a pesticide composition. Specifically, the present disclosure relates to a pesticide composition for controlling indoor and outdoor pests, said composition includes: *Pogostemon cablin* in an amount ranging from about 0.05% to about 35% by weight of the composition; Citral in an amount ranging from about 0.1% to about 30% by weight of the composition; Thymol in an amount ranging from about 0.1% to about 30.0% by weight of the composition; Camphor in an amount ranging from about 0.1% to about 35% by weight of the composition; and rest is an excipient.

In one or more embodiments, *Pogostemon cablin* is present in an amount ranging from about 0.1% to about 30% by weight of the composition; Citral is present in an amount ranging from about 0.2% to about 25% by weight of the composition; Thymol is present in an amount ranging from about 0.2% to about 25.0% by weight of the composition; Camphor is present in an amount ranging from about 0.1% to about 30% by weight of the composition; and rest is an excipient.

In one or more embodiments, the pesticide composition includes *Pogostemon cablin* in an amount ranging from about 0.05% to about 35% by weight, including 0.07% to 30%, 0.08% to 32%, 0.1% to 30%, 0.2% to 25%, 0.2% to 30%, 0.4% to 30%, 0.5% to 25%, 0.5% to 20%, 1 % to 35%, 1.5% to 30%, 2% to 25%, 2.5% to 20%, or 4% to 35%.

In one or more embodiments, the pesticide composition includes Citral in an amount ranging from about 0.1% to about 30% by weight, including 0.2% to 30%, 0.3% to 28%, 0.5% to 30%, 0.4% to 25%, 0.5% to 28%, 0.5% to 25%, 0.5% to 20%, 0.6% to 30%, 0.8% to 25%, 1 % to 30%, 1.5% to 30%, 2% to 30%, 2.5% to 30%, 2.5% to 25%, 4% to 30%, 4% to 25% or 5% to 25%.

In one or more embodiments, the pesticide composition includes Thymol in an amount ranging from about 0.1% to about 30% by weight, including 0.2% to 30%, 0.3% to 28%, 0.5% to 30%, 0.4% to 25%, 0.5% to 28%, 0.5% to 25%, 0.5% to 20%, 0.6% to 30%, 0.8% to 25%, 1 % to 30%, 1.5% to 30%, 2% to 30%, 2.5% to 30%, 2.5% to 25%, 4% to 30%, 4% to 25% or 5% to 25%.

In one or more embodiments, the pesticide composition includes Camphor in an amount ranging from about 0.1% to about 35% by weight, including 0.2% to 30%, 0.3% to 28%, 0.5% to 30%, 0.4% to 25%, 0.5% to 28%, 0.5% to 25%, 0.5% to 20%, 0.6% to 30%, 0.8% to 25%, 1 % to 30%, 1.5% to 30%, 2% to 30%, 2.5% to 30%, 2.5% to 25%, 4% to 30%, 4% to 25% or 5% to 25%.

In one or more embodiments, the composition comprises a whole of or a part of or an extract of or an oil of *Pogostemon cablin.* In one or more embodiments, the composition comprises roots, leaves, twigs, flowers, seeds, or a combination thereof of *Pogostemon cablin.* In one or more embodiments, the composition comprises leaves or twigs of *Pogostemon cablin.* In one or more embodiments, the composition comprises an oil of *Pogostemon cablin.* In one or more embodiments, the composition comprises leaf oil of *Pogostemon cablin.*

In one or more embodiments, the composition of the present disclosure aids in repelling, killing, preventing, and/or reducing various indoor and outdoor pests.

In one or more embodiments, the indoor and outdoor pests are selected from the group consisting of arachnids, centipedes, mosquitoes, houseflies, drain flies, *Vespa* spp. (Hornet), cockroaches, ants, bedbugs, spiders, mites, aphids, thrips, whiteflies, loopers, worms, beetles, leafrollers, moths, reptiles, and weevils including larvae, and eggs thereof.

In one or more embodiments, the excipient is selected from any or a combination of a perfume, a preservative, an adhesive, a smoldering agent, a burning aid, a binder, a filler, a burnable base, a propellant, a solvent, a wetting agent, a solubilizer, a hardening agent, an emulsifier, a diluent, a lubricant, a colouring agent, a lower alcohol, anti-freezing agent, and a neutralization base.

Exemplary perfume(s)/fragrance agent(s) include, without limitation, various naturally or commercially available orange oil, lemon oil, lavender oil, peppermint oil, eucalyptus oil, citronella oil, lime oil, yuzu oil, jasmine oil, cypress oil, green tea essential oil, limonene, α-pinene, linalool, geraniol, phenylethyl alcohol, amylcinnamic aldehyde, cuminaldehyde, benzyl acetate, Pure Soul MMN37683, Classic Guggul MMN37681, Lemony perfume, and the like, or one or more combinations thereof. However, a person skilled in the art would appreciate that any other perfume(s)/fragrance agent(s) can be utilized to serve the intended purpose.

Exemplary preservative(s) include, without limitation, sodium benzoate, potassium sorbate, phenoxyethanol, p-hydroxybenzoic acid esters, sorbic acid, benzoic acid, propionic acid or salts, Butylated Hydroxytoluene (BHT), and the like, or one or more combinations thereof. However, a person skilled in the art would appreciate that any other preservative(s) can be utilized to serve the intended purpose.

Exemplary adhesive(s) include, without limitation, Joss (Jiggit powder), corn starch, wheat starch, potato starch, pea starch, Tamarind starch, and the like, or one or more combinations thereof. However, a person skilled in the art would appreciate that any other adhesive (s) can be utilized to serve the intended purpose.

Exemplary smoldering agent(s) or burning aid(s) include, without limitation, potassium nitrate (KNO₃), sodium nitrate (NaNO₃), potassium chloride, and the like, or one or more combinations thereof. However, a person skilled in the art would appreciate that any other smoldering agent(s) or burning aid(s) can be utilized to serve the intended purpose.

Exemplary binder(s) include, without limitation, guar gum, xanthan gum, starch, for example, potato starch, maize starch, corn starch, tamarind seed powder, water, povidone, copovidone, kaolin, glue (any commercially available) and the like, or one or more combinations thereof. However, a person skilled in the art would appreciate that any other binder(s) can be utilized to serve the intended purpose.

Exemplary filler(s) or burnable base(s) or thickener(s) include, without limitation, Aerosil 200, Paraffin wax, sawdust powder, Joss (Jiggit powder), coconut shell powder, areca nut shell powder, wood powder, wood chips, wood fiber, wood charcoal, vegetable shell powders (for example, cocoa shell), peanut shell, fibrous waste (for example, rayon waste, cotton waste, waste paper, and mineral fibers), and the like, or one or more combinations thereof. However, a person skilled in the art would appreciate that any other filler(s) can be utilized to serve the intended purpose.

Exemplary propellant(s) include, without limitation, liquefied petroleum gas (LPG), dimethyl ether (DME), nitrogen gas, carbonic acid gas, nitrous oxide, compressed air, and the like, or one or more combinations thereof. However, a person skilled in the art would appreciate that any other propellant(s) can be utilized to serve the intended purpose.

Exemplary solvent(s) include, without limitation, hydrocarbons such as aliphatic hydrocarbon (C₅ to C₂₀ carbon atoms having branched and/or unbranched chains), aromatic hydrocarbon, and alicyclic hydrocarbon, diethyl phthalate, kerosene (for example, Deodorized kerosene), alcohols such as ethanol, isopropanol (isopropyl alcohol) and methanol, esters such as fatty acid ester, vegetable oils, animal oils, and water. Further, among the aliphatic hydrocarbons, a paraffinic hydrocarbon (linear or branched saturated hydrocarbon), *inter alia,* normal paraffin (n-paraffin) is preferably used. It further includes higher fatty acid esters and alcohols. It further includes D-80, D-100, or a mixture thereof in the required amount. Preferable examples of organic solvents include higher fatty acid esters and alcohols. The higher fatty acid ester preferably has 16 to 20 carbon atoms in total. Examples of such a higher fatty acid ester include isopropyl myristate, butyl myristate, hexyl laurate, isopropyl palmitate, and combinations thereof. However, a person skilled in the art would appreciate that any other solvent(s) can be utilized to serve the intended purpose.

Exemplary wetting agent(s) include, without limitation, 1,2-propylene glycol, glycerol, hyaluronate sodium, and the like, or one or more combinations thereof. However, a person skilled in the art would appreciate that any other wetting agent(s) can be utilized to serve the intended purpose.

Exemplary solubilizer(s) include, without limitation, isomeryl alcohol APEO, PEG-40 PEG-60, polysorbate 20, the Tween 80, and the like, or one or more combinations thereof. However, a person skilled in the art would appreciate that any other solubilizer(s) can be utilized to serve the intended purpose.

Exemplary hardening agent(s) include, without limitation, water-miscible sylvite, sodium salt, magnesium salts, calcium salt, and the like, or one or more combinations thereof. However, a person skilled in the art would appreciate that any other hardening agent(s) can be utilized to serve the intended purpose.

Exemplary emulsifier(s) include, without limitation, hydrogenated lecithin, Unitox-3A/4, C12-16 Alcohols, palmitic acid (e.g., Biophillic^{™} H) and cetyl alcohol, glyceryl stearate, PEG-75 stearate, ceteth-20, steareth-2 (Emulium^{®} Delta), Tween (Tween 20, Tween 40, Tween 60 and Tween 80), Atlas G-50002L- LQ (CQ), Atlox 4913- LQ (MV), and the like, or one or more combinations thereof. However, a person skilled in the art would appreciate that any other emulsifier(s) can be utilized to serve the intended purpose.

Exemplary diluent(s) include, without limitation, microfine cellulose, lactose, starch, pregelatinized starch, calcium carbonate, calcium sulphate, sugar, dextrates, dextrin, dextrose, dibasic calcium phosphate dihydrate, tribasic calcium phosphate, kaolin, magnesium carbonate, magnesium oxide, maltodextrin, mannitol, potassium chloride, powdered cellulose, sodium chloride, sorbitol, talc, silicon oil, and the like, or one or more combinations thereof. However, a person skilled in the art would appreciate that any other diluent(s) can be utilized to serve the intended purpose.

Exemplary lubricant(s) include, without limitation, zinc stearate, magnesium stearate, stearic acid, calcium stearate, Vegetable stearin, and the like, or one or more combinations thereof. However, a person skilled in the art would appreciate that any other lubricant(s) can be utilized to serve the intended purpose.

Exemplary colouring agent(s) include, without limitation, E102 Tartrazine, E104 Quin- oline Yellow, E110 Sunset Yellow FCF, E120 - Cochineal, carminic acid, Carmines, E122 Azorubine (Carmoisine), E123 Amaranth, E124 Ponceau 4R (Cochineal Red A), E127 Erythrosine, E129 Allura Red, E131 Patent Blue, and the like, or one or more combinations thereof. However, a person skilled in the art would appreciate that any other colouring agent(s) can be utilized to serve the intended purpose.

Exemplary lower alcohol(s) include, without limitation, ethanol, ethylene glycol, propane diols, glycerin, butanediol, and the like, or one or more combinations thereof. However, a person skilled in the art would appreciate that any other lower alcohol(s) can be utilized to serve the intended purpose.

Exemplary anti-freezing agent(s) include, without limitation, ethylene glycol, propane diols, glycerine or the urea, glycol (mono ethylene glycol, diethylene glycol, polypropylene glycol, Propylene glycol, polyethylene glycol), glycerine, urea, magnesium sulfate heptahydrate, sodium chloride and the like, or one or more combinations thereof. However, a person skilled in the art would appreciate that any other -freezing agent(s) can be utilized to serve the intended purpose.

Exemplary neutralization base(s) include, without limitation, triethanolamine. However, a person skilled in the art would appreciate that any other neutralization base(s) can be utilized to serve the intended purpose.

While one or more embodiments of the present disclosure enumerates and describes a list of excipients that may be used in the composition to serve an intended purpose, it should be appreciated that one or more excipient(s) may also serve more than one function, obviating the need of inclusion of separate excipients for the specified purpose. Although several embodiments of the present disclosure name a few of the commonly used excipients, any other excipient(s) known to or appreciated by a skilled person can also be used to realize the advantageous compositions of the present disclosure.

In one or more embodiments, the composition is formulated into a liquid form, a semi-solid form, a solid form, a gel, or a gaseous form.

In one or more embodiments, composition is formulated into a cream, a lotion, an ointment, a gel, a spray, a vaporizer, a paste, a powder, a dust, a wax, a chalk, granules, pellets, a burning paper, a coil, a stick, a bait, cordages, a candle, a sealing agent, a caulk, a patch, a bait, a mat, a filler, a wood filler, a crack and service filler, self-ignite formulation, a mist, a liquid vaporizer, an aerosol, an emulsion, a suspension, a micro-emulsion, a varnish dispersion, a fumigant, or a solution.

The composition according to the present disclosure is a self-combusting powder, that is, it burns completely without the need for a wick, producing smoke wherein, it has a higher density than air and is heavy. In one or more embodiments, the powder formulation can be loaded in/on a combustible material rolling over a self-ignitable match stick. The present disclosure also provides a method for applying pesticides, methods for manufacturing the self-combusting powder composition, and the use thereof for pest control wherever required.

In one or more embodiments, the self-ignite formulations are delivered through various conventional devices, for example, a device that may contain an ignitable material such as potassium nitrate, and the like, that may lead to fire flame after being stroked against a striking surface (made up of materials such as sand, powdered glass, red phosphorus and the like). In one or more embodiments, in such devices for e.g. a match head is dragged along the striking surface, the sand and powdered glass cause friction and heat, which is enough to convert some of the red phosphorous to white phosphorus, a volatile chemical that immediately ignites upon coming in contact of the air and, hence, act as a source of smoldering for a pesticidal formulation loaded on a wooden splint. Any device, known to or appreciated by a person skilled in the art can be used to deliver the pesticide composition/formulation disclosed in the present disclosure to serve the intended purpose.

The present disclosure further provides a solid pesticide formulation for controlling indoor and outdoor pests, said formulation includes: *Pogostemon cablin* in an amount ranging from about 0.05% to about 35% by weight of the formulation; Citral in an amount ranging from about 0.1% to about 30% by weight of the formulation; Thymol in an amount ranging from about 0.1% to about 30.0% by weight of the formulation; Camphor in an amount ranging from about 0.1% to about 35% by weight of the formulation; and rest is an excipient.

In one or more embodiments, the solid formulation comprises a granule, a paste, a powder, a dust, a wax, a chalk, pellets, a burning paper, a coil, a stick, a bait, cordages, a candle, a sealing agent, a caulk, a patch, a bait, a mat, a filler, a wood filler, a crack and service filler, and a self-ignite formulation.

In one or more embodiments, the solid formulation is a coil. In one or more embodiments, the coil formulation for controlling indoor and outdoor pests includes: *Pogostemon cablin* in an amount ranging from about 0.05% to about 35% by weight of the formulation; Citral in an amount ranging from about 0.1% to about 30% by weight of the formulation; Thymol in an amount ranging from about 0.1% to about 30.0% by weight of the formulation; Camphor in an amount ranging from about 0.1% to about 35% by weight of the formulation; and rest is an excipient.

The present disclosure further provides a liquid or a semisolid pesticide formulation for controlling indoor and outdoor pests, said formulation includes: *Pogostemon cablin* in an amount ranging from about 0.05% to about 35% by weight of the formulation; Citral in an amount ranging from about 0.1% to about 30% by weight of the formulation; Thymol in an amount ranging from about 0.1% to about 30.0% by weight of the formulation; Camphor in an amount ranging from about 0.1% to about 35% by weight of the formulation; and rest is an excipient.

In one or more embodiments, the liquid or a semisolid formulation comprises a cream, a lotion, an ointment, a gel, a spray, a vaporizer, a paste, a mist, a liquid vaporizer, an aerosol, an emulsion, a suspension, a micro-emulsion, a varnish dispersion, a fumigant, or a solution.

The present disclosure also relates to a method for controlling indoor and outdoor pests. The method for controlling indoor and outdoor pests comprises, providing a pesticide composition including *Pogostemon cablin* in an amount ranging from about 0.05% to about 35% by weight of the composition; Citral in an amount ranging from about 0.1% to about 30% by weight of the composition; Thymol in an amount ranging from about 0.1% to about 30.0% by weight of the composition; Camphor in an amount ranging from about 0.1% to about 35% by weight of the composition; and rest is an excipient.

In one or more embodiments, the indoor and outdoor pests are selected from the group consisting of arthropods such as insects, arachnids, centipedes, mosquitoes, houseflies, drain flies, *Vespa* spp. (Hornet), cockroaches, ants, bedbugs, spiders, mites, aphids, thrips, whiteflies, loopers, worms, beetles, leafrollers, moths, and weevils including larvae, and eggs thereof.

*Pogostemon cablin* is a species of flowering plant in the family Lamiaceae, commonly called the mint or deadnettle family. The plant grows as a bushy perennial herb, with erect stems reaching up to 75 centimeters (2.5 ft) in height and bearing small, pale pink-white flowers. It is commonly known as Patchouli. It is native to the island region of Southeast Asia, including Sri Lanka, Indonesia, and the Philippines. It is also found in many parts of North East India.

In accordance with an embodiment, the composition of the present disclosure is realized by using extracts or oils or any plant part thereof commercially procured from the following manufacturers:

| **Sr. No.** | **INGREDIENTS** | **MANUFACTURER** |
|---|---|---|
| **1** | *Pogostemon cablin* (Common name: Patchouli) | Jl. Raya Wanaherang No.16, RT.4/RW.4, Cicadas, Kec. Gn. Putri, Kabupaten Bogor, Jawa Barat- 16964, Indonesia |
| **2** | Citral | Natures Natural India Oils Pvt. Ltd., Ghaziabad, Uttar Pradesh- 201010 |
| **3** | Thymol | Nishant Aromas Private Limited, Plot No. 30, 31 & 61, Sidcul, Haridwar-249 403, Uttarakhand, India. |
| **4** | Camphor | Mangalam Organics Ltd. Tulsiani Chambers, Nariman Point, Mumbai-21 |

The compositions and formulations of the present disclosure can be manufactured by any conventional method, known to or appreciated by a person skilled in the art working in the pertinent field to serve the intended purpose.

The ingredients of the composition of the present disclosure exhibit functional reciprocity therebetween, and accordingly, aid in repelling, killing, preventing, and/or reducing the population of indoor as well as outdoor pests. Compositions/formulations of the present disclosure also exhibit superior storage stability. The composition/formulations are safe and free of any ill effects such as irritation, allergy, uneasiness, reduction in oxygen content, etc.

The inventors of the present disclosure realized that the presence of camphor in the compositions and formulations plays a very crucial role in achieving control over indoor as well as outdoor pests as camphor exhibits strong functional reciprocity and synergism with the other active ingredients of the present compositions/formulations.

### EXAMPLES

The disclosure will now be illustrated with working examples, which are intended to illustrate the working of disclosure and not intended to take restrictively to imply any limitations on the scope of the present disclosure. Unless defined otherwise, all technical and scientific terms used herein have the same meaning as commonly understood to one of ordinary skill in the art to which this disclosure belongs. Although methods and materials similar or equivalent to those described herein can be used in the practice of the disclosed methods and compositions, the exemplary methods, devices, and materials are described herein. It is to be understood that this disclosure is not limited to particular methods, and experimental conditions described, as such methods and conditions may vary.

### A COIL FORMULATION

**TABLE 1: A Coil formulation**

| **Ingredients** | **Role in formulation** | **Formulations** | | | | | |
|---|---|---|---|---|---|---|---|
| | | **(in %w/w)** | | | | | |
| | | **F1** | **F2** | **F3** | **F4** | **F5** | **F6** |
| *Pogostemon cablin* (Patchouli) | Pesticide | 0.5 | 0 | 0 | 0 | 0.4 | 0.8 |
| Citral | Pesticide | 0 | 1.6 | 0 | 0 | 0.8 | 1.6 |
| Thymol | Pesticide | 0 | 0 | 1.6 | 0 | 0.8 | 1.6 |
| Camphor | Pesticide | 0 | 0 | 0 | 1.6 | 0.8 | 1.6 |
| Coconut Shell powder | Binder | 30.43 | 30.43 | 30.43 | 30.43 | 30.43 | 30.43 |
| Gaur gum | Binder | 1.35 | 1.35 | 1.35 | 1.35 | 1.35 | 1.35 |
| Rajput (jigget) | Binder | 4.65 | 4.65 | 4.65 | 4.65 | 4.65 | 4.65 |
| Tamarind Starch | Adhesive | 14.75 | 14.75 | 14.75 | 14.75 | 14.75 | 14.75 |
| Sodium Benzoate | Preservative | 0.3 | 0.3 | 0.3 | 0.3 | 0.3 | 0.3 |
| Potassium Nitrate(KNO3) | Burning agent | 2 | 2 | 2 | 2 | 2 | 2 |
| Unitox-3 A/4 | Emulsifier | 0.05 | 0.05 | 0.05 | 0.05 | 0.05 | 0.05 |
| Brown Saw Dust | Filler | 45.97 | 44.87 | 44.87 | 44.87 | 43.67 | 40.87 |
| **TOTAL** | | 100 | 100 | 100 | 100 | 100 | 100 |
| | | | | | | | |

| **MOSQUITOCIDAL EFFICACY in** Peet grady chamber (5.83 M³) | | | | | | | |
|---|---|---|---|---|---|---|---|
| **KT50 (Min)** | | 43.9 | 42.1 | 40.8 | 44.6 | 25.2 | 26.1 |
| **KT90 (Min)** | | 87.3 | 88.3 | 82.7 | 89.7 | 51.6 | 58.7 |

### METHOD OF PREPARATION OF THE COIL FORMULATION

All the ingredients were weighed accurately per Table 2 above, and the formulation was prepared as follows: Phase A: Coconut Shell powder, Gaurgum, Rajput (jigget), Tamarind Starch, and Brown Saw Dust were mixed thoroughly and followed by the addition of dissolved (in water) Sodium Benzoate and Potassium Nitrate(KNO3) to obtain a Phase A mixture. Phase B: *Pogostemon cablin* (Patchouli), Citral, Thymol, and Camphor were taken in a vessel to obtain a blend followed by the addition of emulsifier viz. Unitox-3A/4 and the water to obtain a Phase B mixture. The Phase B mixture was added to the Phase A mixture to obtain a dough. The dough was punched into the commercially available coils followed by dry heating to obtain coil that was later used to control indoor and outdoor pests.

### EFFICACY STUDY OF THE COIL FORMULATION

The formulations realized in **Table 1** above coil formulation of the present disclosure *vis-à-vis* the coil formulations of the individual active ingredient(s) were subjected to efficacy studies, particularly, mosquitocidal activity. The mosquitocidal activity was determined by using a Peet Grady Chamber. The Peet Grady Chamber is a 5.8 m³ chamber having all 5 sides made up of glass with glazy tile flooring. At the bottom left side, there is a small window of 0.5 X 0.5 ft. for releasing insects in the chamber. Apart from this, it has a door on one wall and four 2-inch diameter holes on each wall placed at a distance of 1.4 m from the ground and in the centre of the wall. These holes are used for dispensing test products inside the chamber. During experimentation, the holes, door, and small window, all were in closed condition. For consistency and reproducibility of results, the environmental conditions viz. temperature of 27±3°C and Relative Humidity of about 50-80% were maintained. Before evaluating the mosquitocidal activity of Formulations, F5 and F6 *vis-à-vis* formulation of the individual active ingredients, F1-F4 the *Culex quinquefasciatus* mosquitoes were first introduced into the chamber, and de-contamination checks were performed for the first ½ hour. If no knockdown of mosquito(es) was seen, then a fresh lot (100 nos.) of *Culex quinquefasciatus* mosquitoes was introduced, and the coil was burned inside the chamber. The knockdown of insects was observed every 5 minutes for about 60 minutes. Thereafter, the knocked-down mosquitoes were transferred to a clean container with food of 10% sucrose contained in a cotton swab. The mortality readings were noted after 24 hours. Observations were interpreted in Knock-down times, KT₅₀ and KT₉₀ [KT₅₀ is the time (in minutes) needed to knock down 50% of the mosquito population used for an experiment, and KT₉₀ is the time (in minutes) needed to knock down 90% of the mosquito population used for an experiment] and it is determined by the Probit analysis software. Percent mortality was calculated after 24 hours.

As shown in Table 1 above, the formulations, F5 and F6 of the present disclosure afford improved control of mosquitoes (pests) compared to the formulations (F1 to F4) of the individual active ingredients. Accordingly, it could be concluded that the composition/ formulation of the present disclosure offers a significant improvement in controlling various indoor and outdoor pests as compared to the compositions/ formulations of the individual active ingredient(s).

### A FUMIGATION FORMULATION AND EFFICACY THEREOF

**Table 2: A Fumigation formulation and efficacy thereof**

| **Sr. No.** | **Ingredients** | **Role in formulation** | **Amount in wt. %** |
|---|---|---|---|
| **1** | *Pogostemon cablin* (Patchouli) | Pesticide | 10 |
| **2** | Citral synthetic | Pesticide | 10 |
| **3** | Thymol | Pesticide | 10 |
| **4** | Camphor | Pesticide | 10 |
| **5** | Butylated Hydroxytoluene (BHT) | Preservative | 1 |
| **6** | Isopropyl alcohol | Solvent | 2 |
| **7** | LPG | Propellant | 57 |
| **Total** | | | 100 |
| | | | |

| **MOSQUITOCIDAL EFFICACY (Room Chamber)** | | | |
|---|---|---|---|
| **KT50 (Min)** | | **3.7** | |
| **KT90 (Min)** | | **5.1** | |
| | | | |

| **HOUSEFLY KNOCK-DOWN EFFICACY (Room Chamber)** | | | |
|---|---|---|---|
| **KT50 (Min)** | | 27.8 | |
| **KT90 (Min)** | | 54.7 | |
| | | | |

| **GERMAN COCKROACH KNOCK-DOWN EFFICACY (Room Chamber)** | | | |
|---|---|---|---|
| **KT50 (Min)** | | 24.9 | |
| **KT90 (Min)** | | 49.7 | |

All the ingredients were weighed accurately per Table 2 above and properly mixed (except propellant) to obtain a blend in a beaker. The blend was transferred into a commercially available aerosol tin, and a valve was put in the tin followed by its crimping to obtain a crimped tin. The above-weight propellant was added into the crimped tin to obtain the aerosol formulation and fixed with a one-time release actuator for fumigation purposes to control various indoor and outdoor pests. The evaluation of the product is done in a room chamber (30 M³) unlike other products in the Peet Grady chamber (5.83 M³). The assay is the same except for the size of the chamber.

### A NOGAS SPRAY FORMULATION AND EFFICACY THEREOF

**TABLE 3: A NoGas Spray formulation and efficacy thereof**

| **Sr. No.** | **Ingredients** | **Role in formulation** | **Amount in w/w %** |
|---|---|---|---|
| **1** | *Pogostemon cablin* (Patchouli) | Pesticide | 5 |
| **2** | Citral synthetic | Pesticide | 5 |
| **3** | Thymol | Pesticide | 5 |
| **4** | Camphor | Pesticide | 5 |
| **5** | Butylated Hydroxytoluene (BHT) | Preservative | 1 |
| **6** | Isopropyl alcohol | Solvent | 79 |
| **Total** | | | 100 |
| | | | |

| **GERMAN COCKROACH KNOCK-DOWN EFFICACY (EPA method)** | | | |
|---|---|---|---|
| **KT50 (Min)** | | 16.2 | |
| **KT90 (Min)** | | 33.3 | |

All the ingredients were weighed accurately per Table 3 above and charged in designated containers. A valve was put and the container was crimped with the help of a crimping machine. Finally, an actuator was put in for the release of the final formulation to control the indoor and outdoor pests.

### EFFICACY STUDY PROTOCOL FOR COCKROACHES:

The bio-efficacy protocol for the present disclosure is derived from the United States Environmental Protection Agency (US-EPA) guideline entitled OCSPP 810.3500: Premises Treatments protocol, with some modifications. The assay comprises a system made from Polyvinyl chloride pipe pieces having a diameter of 15.5 cm and a height of 12.5 cm (both sides are kept open). The assay unit was kept on a glass panel and at the distant end a silicone band (5cm) was applied to prevent the escape of cockroaches. Each assay system had 5 American cockroaches and 10 German cockroaches. The experiment was performed in triplicates. About 0.3gm of test formulation (given under table number 3) was sprayed from the above by maintaining a distance of about 30 cm away from the glass panel surface. After five minutes, each of the exposed cockroaches was transferred to a clean container. The knockdown of the cockroaches was checked every 5 min for a total time of 60 minutes. The KT50 was calculated for each formulation.

### AN AEROSOL FORMULATION AND EFFICACY THEREOF

**TABLE 4: An Aerosol formulation and efficacy thereof**

| **Sr. No.** | **Ingredients** | **Role in formulation** | **Amount in w/w%** |
|---|---|---|---|
| **1** | *Pogostemon cablin* (Patchouli) | Pesticide | 2.5 |
| **2** | Citral | Pesticide | 2.5 |
| **3** | Thymol | Pesticide | 5 |
| **4** | Camphor | Pesticide | 5 |
| **5** | Deodorized kerosene | Solvent | 24.0 |
| **6** | Butylated Hydroxytoluene (BHT) | Preservative | 1 |
| **7** | LPG | Propellant | 60 |
| **Total** | | | 100 |
| | | | |

| **MOSQUITOCIDAL EFFICACY in Peet grady chamber (5.83 M³)** | | | |
|---|---|---|---|
| **KT50 (Min)** | | 9.1 | |
| **KT90 (Min)** | | 19.7 | |
| | | | |

| **HOUSEFLY KNOCK-DOWN EFFICACY in Peet Grady chamber (5.83 M³)** | | | |
|---|---|---|---|
| **KT50 (Min)** | | 22.5 | |
| **KT90 (Min)** | | 47.4 | |

All the ingredients were weighed accurately as per **Table 4** above and were properly mixed (except propellant) to obtain a blend in a beaker. The blend was transferred into a commercially available aerosol tin, and a valve was put in the tin followed by its crimping to obtain a crimped tin. Above weight propellant was added into the crimped tin to obtain the aerosol formulation of the present disclosure comprising *Pogostemon cablin* oil, Citral, Thymol, and Camphor to control various indoor and outdoor pests.

### AN INCENSE STICK FORMULATION AND EFFICACY THEREOF

**TABLE 5: An Incense stick formulation and efficacy thereof**

| **Sr. No.** | **Ingredients** | **Role in formulation** | **Formulation (amount in wt. %)** |
|---|---|---|---|
| 1 | *Pogostemon cablin* (Patchouli) | Pesticide | 1.1 |
| 2 | Citral | Pesticide | 2.2 |
| 3 | Thymol | Pesticide | 2.2 |
| 4 | Camphor | Pesticide | 2.2 |
| 5 | Isopropyl alcohol | Solvent | 1 |
| 6 | Sodium benzoate | Preservative | 0.4 |
| 7 | Joss Powder | Filler | 6 |
| 8 | Guar gum | Binder | 8 |
| 9 | Potassium nitrate | Burning agent | 3 |
| 10 | Coconut shell powder | Filler | 10 |
| 11 | Saw Dust Powder | Filler | 63.9 |
| **Total** | | | 100 |
| | | | |

| **MOSQUITOCIDAL EFFICACY in Peet grady chamber (5.83 M³)** | | | |
|---|---|---|---|
| **Average KT50 (Min)** | | | 24.54 |
| **Average KT90 (Min)** | | | 51.43 |

All the ingredients were weighed accurately per Table 5 above properly mixed, and loaded on the blank or bare sticks commercially available in the market to control various indoor and outdoor pests.

Without further elaboration, it is believed that one skilled in the art can, using the description herein, utilize the present invention to its fullest extent. The embodiments described herein are to be construed as illustrative and not as constraining the remainder of the disclosure in any way whatsoever. While the preferred embodiments of the invention have been shown and described, many variations and modifications thereof can be made by one skilled in the art without departing from the spirit and teachings of the invention. Accordingly, the scope of protection is not limited by the description set out above but is only limited by the claims, including all equivalents of the subject matter of the claims. The disclosures of all patents, patent applications, and publications cited herein are hereby incorporated herein by reference, to the extent that they provide procedural or other details consistent with and supplementary to those set forth herein.

### ADVANTAGES

The present disclosure provides pesticide compositions/formulations that overcome the limitations associated with conventional compositions/formulations.

The present disclosure provides pesticide compositions/formulations for repelling and/or reducing and/or controlling various indoor and outdoor pests.

The present disclosure provides pesticide compositions/formulations for repelling and/or reducing and/or controlling the population of mosquitoes, houseflies, and cockroaches.

The present disclosure provides pesticide compositions/formulations that exhibit high repellence and pesticide activity.

The present disclosure provides pesticide compositions/formulations that exhibit synergistic activity /functional reciprocity, economical and easy to prepare.

## Claims

1. A pesticide composition for controlling indoor and outdoor pests, said composition comprises:
*Pogostemon cablin* in an amount ranging from about 0.05% to about 35% by weight of the composition;
Citral in an amount ranging from about 0.1% to about 30% by weight of the composition;
Thymol in an amount ranging from about 0.1% to about 30.0% by weight of the composition;
Camphor in an amount ranging from about 0.1% to about 35% by weight of the composition; and
rest is an excipient.

2. The composition as claimed in claim 1, wherein *Pogostemon cablin* is present in an amount ranging from about 0.1% to about 30% by weight of the composition; Citral is present in an amount ranging from about 0.2% to about 25% by weight of the composition; Thymol is present in an amount ranging from about 0.2% to about 25.0% by weight of the composition; Camphor is present in an amount ranging from about 0.1% to about 30% by weight of the composition; and rest is an excipient.

3. The composition as claimed in claim 1, wherein the excipient is selected from any or a combination of a perfume, a preservative, an adhesive, a smoldering agent, a burning aid, a binder, a filler, a burnable base, a propellant, a solvent, a wetting agent, a solubilizer, a hardening agent, an emulsifier, a diluent, a lubricant, a colouring agent, a lower alcohol, anti-freezing agent, and a neutralization base.

4. The composition as claimed in claim 1, wherein the composition is formulated into a liquid form, a semi-solid form, a solid form, a gel, or a gaseous form.

5. The composition as claimed in claim 4, wherein the composition is formulated into a cream, a lotion, an ointment, a gel, a spray, a vaporizer, a paste, a powder, a dust, a wax, a chalk, granules, pellets, a burning paper, a coil, a stick, a bait, cordages, a candle, a sealing agent, a caulk, a patch, a bait, a mat, a filler, a wood filler, a crack and service filler, self-ignite formulation, a mist, a liquid vaporizer, an aerosol, an emulsion, a suspension, a micro-emulsion, a varnish dispersion, a fumigant, or a solution.

6. The composition as claimed in claim 1, wherein the indoor and outdoor pests are selected from the group consisting of arachnids, centipedes, mosquitoes, houseflies, drain flies, *Vespa* spp. (Hornet), cockroaches, ants, bedbugs, spiders, mites, aphids, thrips, whiteflies, loopers, worms, beetles, leafrollers, moths, reptiles, and weevils including larvae, and eggs thereof.

7. A solid pesticide formulation for controlling indoor and outdoor pests, said formulation comprises:
*Pogostemon cablin* in an amount ranging from about 0.05% to about 35% by weight of the formulation;
Citral in an amount ranging from about 0.1% to about 30% by weight of the formulation;
Thymol in an amount ranging from about 0.1% to about 30.0% by weight of the formulation;
Camphor in an amount ranging from about 0.1% to about 35% by weight of the formulation; and
rest is an excipient.

8. The solid formulation as claimed in claim 7, wherein the solid formulation comprises a granule, a paste, a powder, a dust, a wax, a chalk, pellets, a burning paper, a coil, a stick, a bait, cordages, a candle, a sealing agent, a caulk, a patch, a bait, a mat, a filler, a wood filler, a crack and service filler, and a self-ignite formulation.

9. A liquid or a semisolid pesticide formulation for controlling indoor and outdoor pests, said formulation comprises:
*Pogostemon cablin* in an amount ranging from about 0.05% to about 35% by weight of the formulation;
Citral in an amount ranging from about 0.1% to about 30% by weight of the formulation;
Thymol in an amount ranging from about 0.1% to about 30.0% by weight of the formulation;
Camphor in an amount ranging from about 0.1% to about 35% by weight of the formulation; and
rest is an excipient.

10. The liquid or a semisolid formulation as claimed in claim 9, wherein the liquid or a semisolid formulation comprises a cream, a lotion, an ointment, a gel, a spray, a vaporizer, a paste, a mist, a liquid vaporizer, an aerosol, an emulsion, a suspension, a micro-emulsion, a varnish dispersion, a fumigant, or a solution.

11. A method for controlling indoor and outdoor pests comprising, providing a pesticide composition comprising:
*Pogostemon cablin* in an amount ranging from about 0.05% to about 35% by weight of the composition;
Citral in an amount ranging from about 0.1% to about 30% by weight of the composition;
Thymol in an amount ranging from about 0.1% to about 30.0% by weight of the composition;
Camphor in an amount ranging from about 0.1% to about 35% by weight of the composition; and
rest is an excipient.
